# EUROPEAN PATENT SPECIFICATION

(11) **EP 2 621 132 B1**
(45) Date of publication and mention of the grant of the patent: **14.09.2016**
(21) Application number: 11826339.1
(22) Date of filing: 27.04.2011
(51) Int. Cl.: H04W 40/34, H04L 12/703, H04L 29/14

(54) **METHOD AND APPARATUS FOR SHARING SERVICE PROTECTION IN MESH NETWORK**
VERFAHREN UND VORRICHTUNG ZUR GEMEINSAMEN NUTZUNG EINES SERVICESCHUTZES IN EINEM MESH-NETZWERK
PROCÉDÉ ET APPAREIL POUR PARTAGER LA PROTECTION DE SERVICES DANS UN RÉSEAU MAILLÉ

(30) Priority: 25.09.2010 CN 201010293284
(43) Date of publication of application: 31.07.2013
(73) Proprietor: ZTE Corporation, Shenzhen, Guangdong 518057 (CN)
(72) Inventor: ZHANG, Yuanyuan, Shenzhen Guangdong 518057 (CN); FU, Sen, Shenzhen Guangdong 518057 (CN); FU, Zhanliang, Shenzhen Guangdong 518057 (CN); DONG, Jun, Shenzhen Guangdong 518057 (CN)
(74) Representative: D'Halleweyn, Nele Veerle Trees Gertrudis
(86) International application number: PCT/CN2011/073366
(87) International publication number: WO 2012/037812

(56) References cited:
- EP-A1- 2 521 310
- CN-A- 1 694 418
- CN-A- 101 321 124
- CN-A- 101 969 382
- US-A1- 2003 018 812
- US-B1- 7 652 983
- US-B1- 7 715 713

## Description

### TECHNICAL FIELD

The disclosure relates to network protection technology, and in particular to a method and apparatus for sharing service protection in a mesh network.

### BACKGROUND

With the continuous development of service demand, the number of network nodes in a transmitting network increases, and a mesh network with increasingly complex topology will be implemented more and more frequently. Traditional link-type 1+1 protection, 1:N protection, M:N protection solutions as well as a looped network protection solution can not be applied directly in a mesh network.

Currently, although a smart mesh network recovery method can realize mesh network protection by using dynamic calculation of a control plane, the recover time of hundreds of milliseconds (ms) thereof is unable to meet the industrial requirement of service recover time of 50 ms. Moreover, as multiple working services share protection resources in a mesh network, there will be a conflict in using protection resources when multiple failures occur.

EP 2521310A1 discloses a method and system for sharing protection of a mesh network protection domain.

US 7652983B1 discloses a method for restoration and normalization in a mesh network.

### SUMMARY

In view of the above, the main purpose of the disclosure is to provide a method and apparatus for sharing service protection in a mesh network, capable of avoiding a conflict in using protection resources, effectively implementing sharing of protection bandwidth resources.

A method for sharing service protection in a mesh network is provided, as recited in claim 1, and an apparatus for sharing service protection in a mesh network is also provided, as recited in claim 9.

Exemplary embodiments are set out in the dependent claims 2-8 and 10-12.

It can be seen from the foregoing technical solution provided by the present disclosure that, the method includes generating a suppression relation according to work path information and protection path information of each service in a protection domain; and when a failure appears/disappears, adjusting a protection state of a service according to the suppression relation, and executing protection processing according to the protection state of the service. By way of protecting route sharing suppression, the disclosure avoids conflict in using protection resources, effectively implementing sharing of protection bandwidth resources, increasing bandwidth utilization rate, enhancing system capability against repeated failures.

### BRIEF DESCRIPTION OF THE DRAWINGS

Fig. 1 is a schematic view of service distribution in a preset loop;
Fig. 2 is a flowchart of a method for sharing service protection in a mesh network according to the disclosure;
Fig. 3 is a schematic view of information on synchronized suppression relation of all nodes according to the disclosure;
Fig. 4 is a schematic view of the compositional structure of an apparatus for sharing service protection in a mesh network according to the disclosure;
Fig. 5 is a schematic view for generating a suppression relation when only an on-loop service is configured according to the disclosure;
Fig. 6 is a schematic view for generating a suppression relation when on-loop and on-string services are configured according to the disclosure;
Fig. 7 is a schematic view for generating a suppression relation when on-loop, on-string, and crossing-loop-and-string services are configured according to the disclosure;
Fig. 8 is a schematic view of the variation of a protected service state according to the disclosure;
Fig. 9 is a schematic view of state transformation in occupation of a protected service according to the disclosure;
Fig. 10 is a schematic view of protection processing when an on-loop service fails according to the disclosure;
Fig. 11 is a schematic view of protection processing when an on-string service fails according to the disclosure; and
Fig. 12 is a schematic view of protection processing when there is a second failure according to the disclosure.

### DETAILED DESCRIPTION

The concept of preset loop protection is first proposed by W. D. Grover and D. Stamatelakis. In a preset loop, on-loop and on-string services can share on-loop protection resources, increasing resource utilization efficiency. In addition, there are only two nodes performing real time switching in the preset loop, which is a protection method combining fast speed of looped network protection switching and high utilization efficiency of mesh network bandwidth, and has an extensive development prospect particularly in an optical transport network.

At the time of network planning, the number of nodes within a protection domain is suggested to be limited to 16, so as to meet the requirement on system switching time and network survivability. Generally speaking, multiple service types are configured in one protection domain, and a link generally includes multiple channels. Taking an optical transport network (OTN) as an example, a channel may be an optical channel transport unit (OTUk) and an optical data unit (ODUk). One OTU2 or ODU2-speed link may include 8 OTU0 or ODU0 channels. To facilitate description, all illustrations herein are described under the circumstance with the same service signal type and consistent channel number of protection paths.

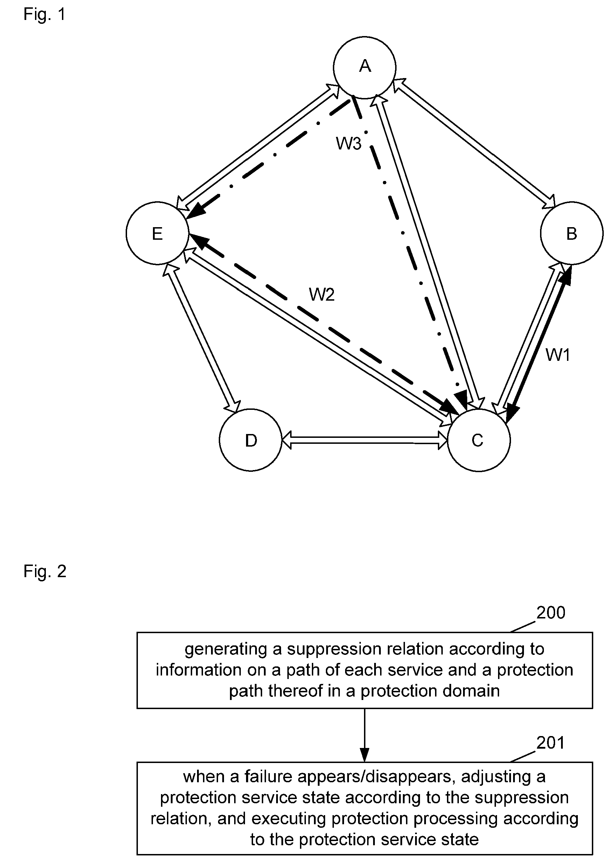

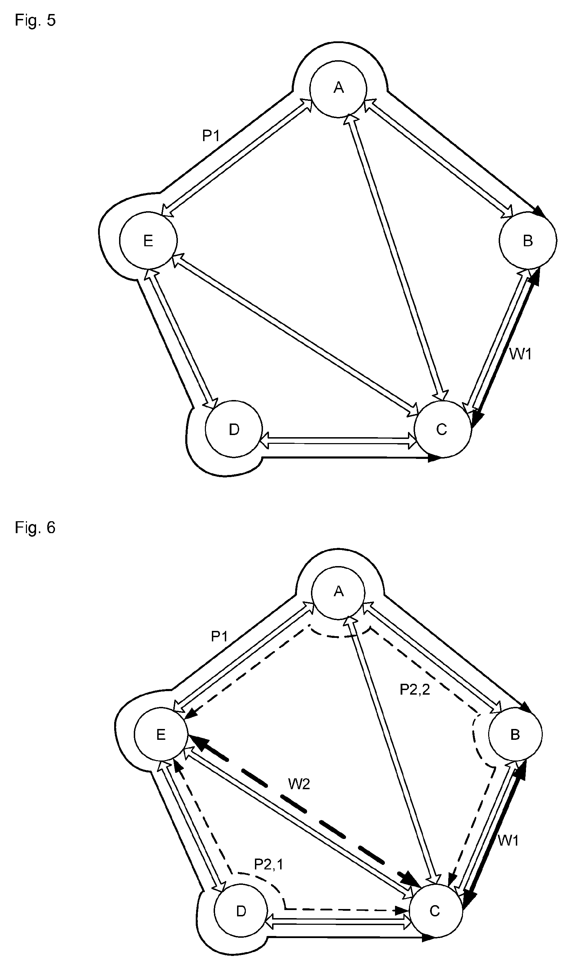

Fig. 1 is a schematic view of service distribution in a preset loop. As shown in Fig. 1, 5 nodes, namely, A, B, C, D, and E, are included in the preset loop, wherein W1 represents an on-loop working service with a path of B-C, W2 represents an on-string working service with a path of C-E, W3 represents a crossing-loop-and-string working service with a path of C-A-E (wherein the crossing section C-A is on-string, the crossing section A-E is on-loop). A protection path for these three working services is configured on the loop, and is shared by working services W1, W2, and W3.

Fig. 2 is a flowchart of a method for sharing service protection in a mesh network according to the disclosure. As shown in Fig. 2, the method includes the following steps.

Step 200: a suppression relation is generated according to work path information and protection path information of each service in a protection domain.

Furthermore, the suppression relation generated in this step needs to be synchronized within the protection domain.

As shown in Table 1, the suppression relation includes an identifier for a local protected service, the number of all protected services that can be suppressed by the local protected service (also referred to as a suppressed protected service number), and an identifier for other protected services that can be suppressed by the local protected service (also referred to as a suppressed protected service identifier).

**Table 1**

| | | |
|---|---|---|
| Local protected service identifier | Suppressed protected service number | Suppressed protected service identifier |

In this step, the basic principle for generating the suppression relation is that: among mutually suppressing services, service link speeds are the same, a protection path topology has two or more than two overlapped continuous nodes, and channel numbers used by the services are in correspondence.

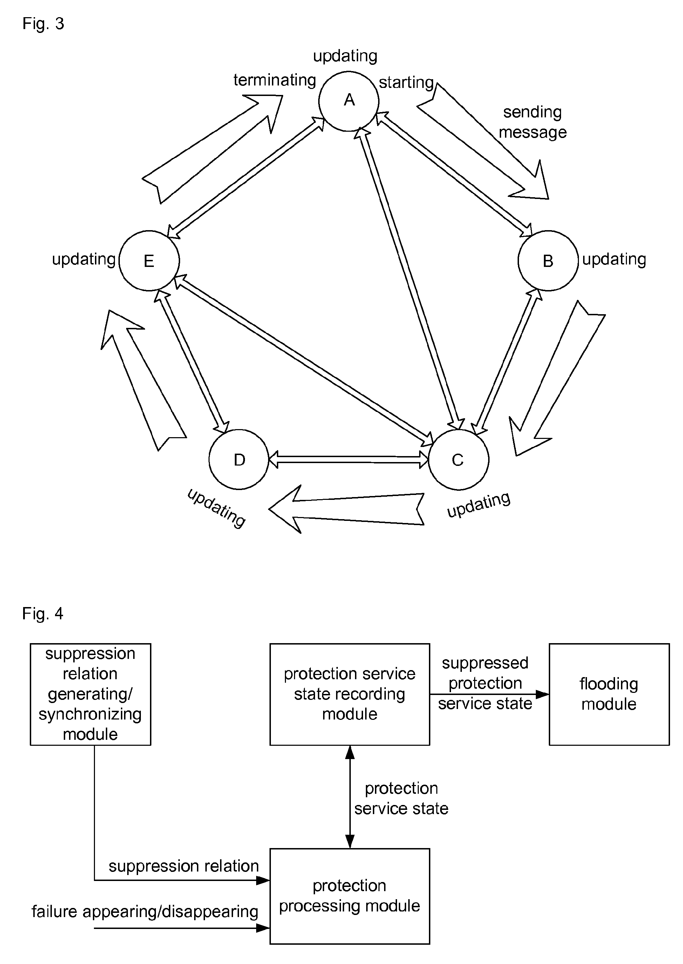

To synchronize the suppression relation is to ensure that suppression relation tables saved at all nodes within the protection domain give consistent information. Only by maintaining one common suppression relation table among nodes, can it be implemented properly to control occupancy by a service of a shared protection path when a working service fails. Fig. 3 is a schematic view of information on synchronized suppression relation of all nodes according to the disclosure. Taking the preset loop shown in Fig. 1 as an example, as shown in Fig. 3, the synchronizing process of one node therein includes that: node A first sends a suppression relation table to node B; node B updates, after receiving the suppression relation table, a local suppression relation, and sends an updated suppression relation table to node C, so on and so forth, until node A updates, after receiving a suppression relation table from node E, a local suppression relation. A common suppression relation table is saved in each node in a protection domain after each one in the protection domain has completed the synchronization according to the process shown in Fig. 3.

Step 201: when a failure appears/disappears, a protection state of a service is adjusted according to the suppression relation, and protection processing is executed according to the protection state of the service.

A protection state of a service includes a protection state of a work path and a protection state of a protection path. As shown in Table 2, the protection state of a service includes the identifier for the local protected service, a local protected service state, and an identifier for a protected service suppressing the local protected service (also referred to as a suppressing protected service identifier).

**Table 2**

| | | |
|---|---|---|
| Local protected service identifier | Local protected service state | Suppressing protected service identifier |

In Table 2, the state of the local protected service includes three states, namely, an idle state indicating no working service occupying a protection path, a busy state indicating occupation of a protection path (a working service being switched to the protection path), and a suppressed state indicating that the protected service is suppressed by other protected services. In the suppressed state, no processing is performed for a signal degradation (SD) and/or signal failure (SF) alert. It needs to be noted that according to the suppression relation, a protected service may be suppressed by one or more other protected services having a suppression relation, and only when all suppressing protected services have released protection resources, can the suppressed protected service be used.

In this step, when a work path fails, the protection state of the service is checked:
when a state of a protected service is the idle or suppressed state, the entire service flow is born on a work path, in which case, if the protected service is in the idle state, that is, no other service occupies the protection path, then protection switching is performed so as to switch the service to the protection path, other protected services that can be suppressed by the protected service are set to the suppressed state according to the suppression relation, and the state of a suppressed protected service is flooded. Furthermore, a working service with multiple protection paths is preferentially switched to a protected service with high protection priority;

If the protected service is in the suppressed state, alerting information currently unprocessed is recorded.

When the protected service is in the busy state, the service flow is born on the protection path, and no protection processing is performed.

When a failure of a work path disappears, the a state of a protected service of the work path is checked:
If the protected service is in the suppressed state, that is, only an alerting at the occurrence of the failure is recorded previously, but no protection switching is triggered, then the alerting record is deleted directly; if the protected service is in the busy state, that is, the working service has been switched to a protection path, then the working service is returned to the work path, the suppressed protected service is released, namely, other protected services, which can be suppressed by this protected service and has been set to the suppressed state, is restored to the idle state, and the state of the restored protected service is flooded.

Furthermore, the released protected service looks up previously recorded alerting information, and processes a recorded un-triggered failure alert by way of step 201.

Wherein, flooding is a technical means customarily used by one skilled in the art, the particular implementation of which is beyond, nor is intended to limit, the scope of the disclosure, and is not elaborated here.

Wherein, the working service priority is determined by a service quality level designated by a client; in a scenario where multiple working services share protection resources, high-quality prioritized protection over a working service is implemented through priority occupation. In a scenario where one working service has multiple protection paths, to prevent inconsistency in switching direction of up-way and down-way nodes of the service at the time of switching, and to reduce conflict in using a protection link when failures occur frequently, it is required to determine the protection priority of a protected service. The method for determining the protection priority of a protected service is that: a protected service that suppresses fewer other protected services is regarded as one with higher protection priority; when protected services suppress the same number of other protected services, a protected service with a shorter protection path has higher protection priority; and when protection path lengths (the number of nodes included in the topology) are also the same, a protected service with a smaller protected service identifier has higher protection priority.

An apparatus is further provided for the method according to the present disclosure. The apparatus according to the present disclosure can be configured in each node in a protection domain. Fig. 4 is a schematic view of the compositional structure of an apparatus for sharing service protection in a mesh network according to the disclosure. As shown in Fig. 4, the apparatus includes at least a suppression relation generating/synchronizing module, a protected service state recording module, a protection processing module, and a flooding module, wherein
the suppression relation generating/synchronizing module is configured to generate a suppression relation according to work path information and protection path information of each service , and perform synchronization within a protection domain;
the protected service state recording module is configured to record a protected service state in a protection state of a service, update a state of a protected service as a suppressed state when the protected service is suppressed, and output the state of the suppressed protected service to the flooding module;
the protection processing module is configured to adjust, when a failure appears/disappears, the protection state of the service according to the suppression relation in the suppression relation generating/synchronizing module, execute protection processing according to the protection state of the service, and update the protected service state recorded in the protected service state recording module; and
the flooding module is configured to flood, when receiving a notification from the protection processing module, the protected service state updated by the protected service state recording module within the protection domain.

Wherein, the protection processing module is specifically configured to check, when a work path fails, a state of a protected service of a protection path of the failing work path according to information in the protected service state recording module;
when a protected service is in the idle state, perform protection switching so as to switch a service to the protection path, set other protected services that can be suppressed by the protected service to a suppressed state according to the suppression relation in the suppression relation generating/synchronizing module, and notify the flooding module to flood the state of the suppressed protected service; in which case, the protection processing module is further configured to switch a working service with multiple protection paths preferentially to a protected service with high priority;
when the protected service is in the suppressed state, record alerting information currently unprocessed; and
when a protected service is in the busy state, bear a service flow on the protection path, and perform no protection processing.

The protection processing module is specifically configured to check, when a failure of a work path disappears, the protected service state of the work path;
when a protected service is in the suppressed state, delete the alerting record directly; and
when the protected service is in the busy state, return the working service to a work path, release a suppressed protected service, namely, restore other protected services, which can be suppressed by this protected service and has been set to the suppressed state, to the idle state, and notify the flooding module to flood the state of the restored protected service.

The protection processing module is further configured to look up previously recorded alerting information and process a recorded un-triggered failure alert, for a released protected service.

The method according to the present disclosure is elaborated below with embodiments.

In step 200, the suppression relation is calculated and generated by a node according to protection path information saved per se. A node in the protection domain first calculates a suppression relation of a local protected service, and adds one suppression relation table item correspondingly when adding each protected service; then performs synchronization in the protection domain, to obtain overall suppression relation information. The generation of the suppression relation is elaborated below with reference to Figs. 5∼7.

Fig. 5 is a schematic view for generating a suppression relation when only an on-loop service is configured according to the disclosure. As shown in Fig. 5, 5 nodes, namely, A, B, C, D, and E, are included in the preset loop, wherein W1 represents an on-loop working service with a path of B-C (as shown by a thick solid line), a protection route P1 is C-D-E-A-B (as shown by a thick solid line). When only an on-loop service is configured, there is no suppression relation between protected services, in which case the preset loop protection corresponds to traditional loop network protection.

Fig. 6 is a schematic view for generating a suppression relation when on-loop and on-string services are configured according to the disclosure. As shown in Fig. 6, in the case shown in Fig. 5, a single string working service W2 (as shown by a thick dashed line) continues to be added; protected services of W2 takes two routes, one is P2,1 with a topology of C-D-E (as shown by a thick dashed line), the other is P2,2 with topology of E-A-B-C (as shown by a thick dashed line). As shown in Fig. 6, the protected service P1 of W1 and the protected service P2,1 of W2 have an overlapping path C-D-E and are in mutual suppression relation; the protected service P1 of W1 and the protected service P2,2 of W2 have an overlapping path E-A-B and are in mutual suppression relation. It can be learned according to aforementioned protection path information that the number of protected services suppressed by protected service P1 is 2, with the protected service identifiers P2,1 and P2,2; paths of protected service P2,1 and protected service P2,2 have no overlapping crossing section, and no suppression relation; therefore, the number of protected services suppressed by protected service P2,2 is 1, with a protected service identifier P1; the number of protected services suppressed by protected service P2,1 is 1, with a protected service identifier P1.

Furthermore, the number of protected services suppressed by protected service P2,2 is the same as that of P2,1, but the path of protected service P2,1 is shorter than that of protected service P2,2; therefore, the protection priority of protected service P2,1 is higher.

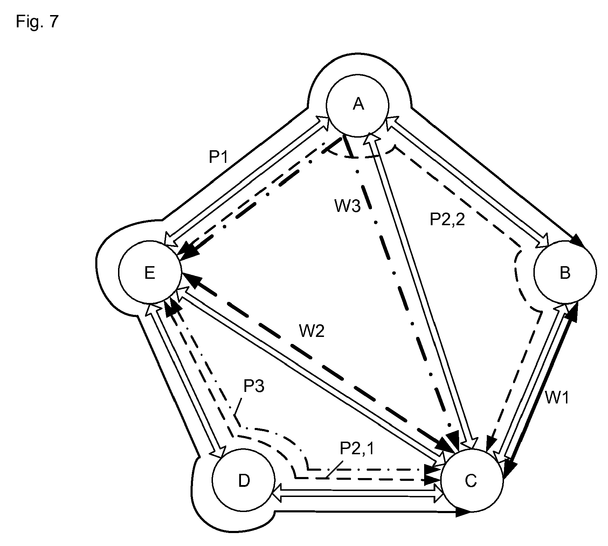

Fig. 7 is a schematic view for generating a suppression relation when on-loop, on-string, and crossing-loop-and-string services are configured according to the disclosure. As shown in Fig. 7, based on what is shown in Fig. 6, a crossing-loop-and-string working service W3 (as shown by a thick dot-dash line) is further added, the topology of the protected service P3 of which is C-D-E (as shown by a thick dot-dash line), coinciding with the path of protected service P2,1; therefore, protected services P3 and P1, P2,1 mutually suppress each other. The number of protected services suppressed by protected service P1 (including protected services P2,1, P2,2 and P3) is 3; the number of protection groups suppressed by P2,1 (including protected services P1 and P3) is 2; the number of protection groups suppressed by protected service P2,2 (protected service P1) is 1. Furthermore, as the number of the protection groups suppressed by protected service P2,2 is the least, the protection priority of protected service P2,2 is the highest.

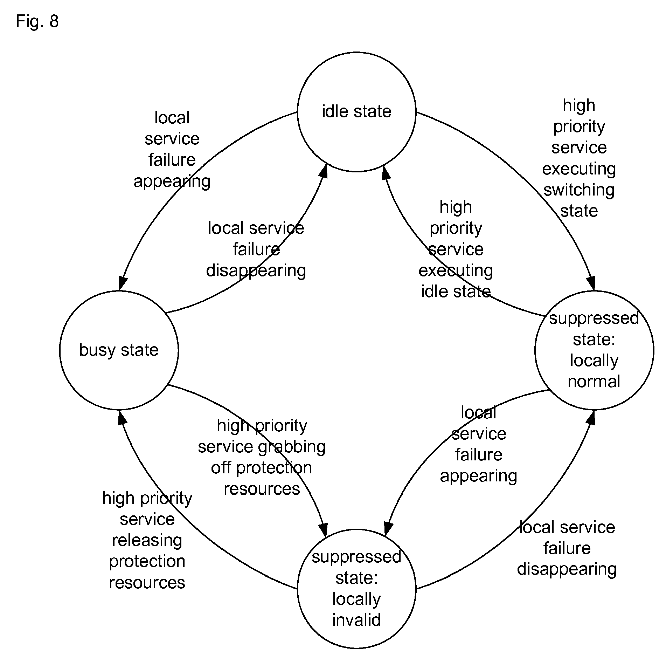

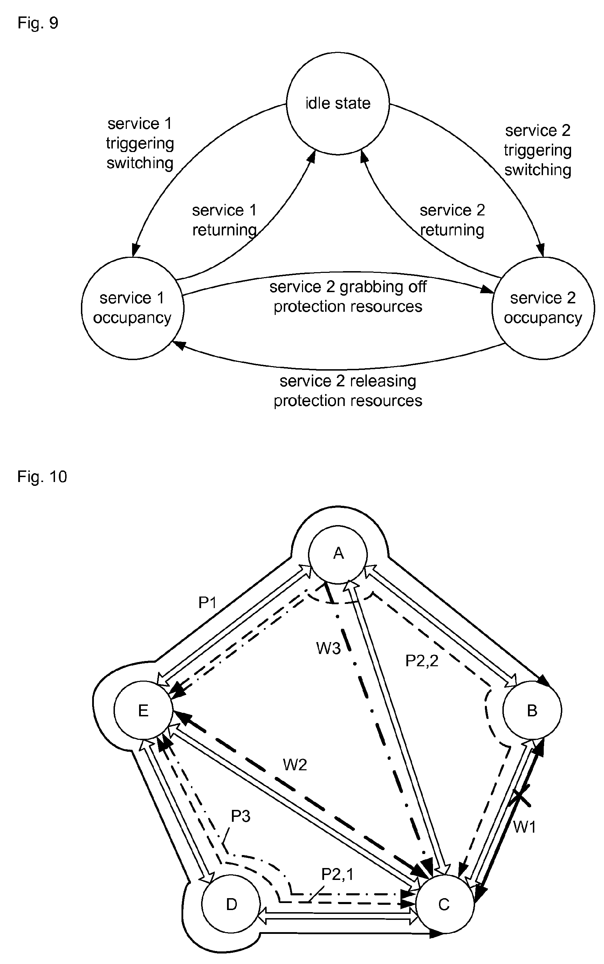

In step 201, a protected service state will change according to failure protection processing, as elaborated below with reference to Figs. 8 and 9.

Fig. 8 is a schematic view of the variation of a protected service state according to the disclosure. As shown in Fig. 8,
when a protected service is in the idle state, if a failure occurs to a local service, a local protecting service state is changed to the busy state; and when the failure disappears, the state of the local protected service is returned to the idle state;
when the protected service is in the busy state, if a high priority service grabs off protection resources, the state of the local protected service is changed to the suppressed state, and is labelled as locally invalid; and when the high priority service releases the protection resources, the state of the local protected service is returned to the busy state;
when the protected service is in the suppressed state and is labelled as locally invalid, if the failure of the local service disappears, then the state of the local protected service is still in the suppressed state, but is labelled as locally normal; and when the failure of the local service occurs, the state of the local protected service is still in the suppressed state, and is labelled as locally invalid; and
when the protected service is in the suppressed state and is labelled as locally normal, if a high priority working service is returned to a work path and releases the protection resources, the state of the local protected service is changed to the idle state; and if the high priority working service is switched to the protection path and occupies the protection resources, the state of the local protected service is changed to the suppressed state, and is labelled as locally normal.

Fig. 9 is a schematic view of state transformation in occupation of a protected service according to the disclosure; it is assumed that working services 1 and 2 share protection resources, and the priority of working service 2 is higher than that of working service 1. As shown in Fig. 9, if service 1 is switched first, the shared protection resources is taken by service 1; then, when service 2 fails, as the priority of working service 2 is higher than that of working service 1, service 2 will grabs off the protection resources; if service 2 fails first, then the protection resources will be taken by service 2; when service 1 fails, it can not grab off the protection resources, until service 2 releases the protection resources and is returned to the idle state.

The protection processing of the disclosure is elaborated below with embodiments of Figs. 10∼12.

Fig. 10 is a schematic view of protection processing when an on-loop service fails according to the disclosure, referring to Fig. 7 for division of working and protected services. As shown in Fig. 10, assume that on-loop service W1 fails and is switched to a protection patch where the protected service P1 is located, in which case protected services P2,1, P2,2, and P3 are all suppressed, the protected service states of which are set as the suppressed state, and an updated suppression relation is flooded. If before on-loop service W1 is restored from failure, working service W2 or W3 fails, as the protected services of which are all suppressed, service W2 or W3 can not be switched to the protection paths. However, this alert generating information will be recorded, and suppression over protected services P2,1, P2,2, and P3 will be removed when the failure of the working service W1, in which case, protection processing of the recorded alert can be retriggered.

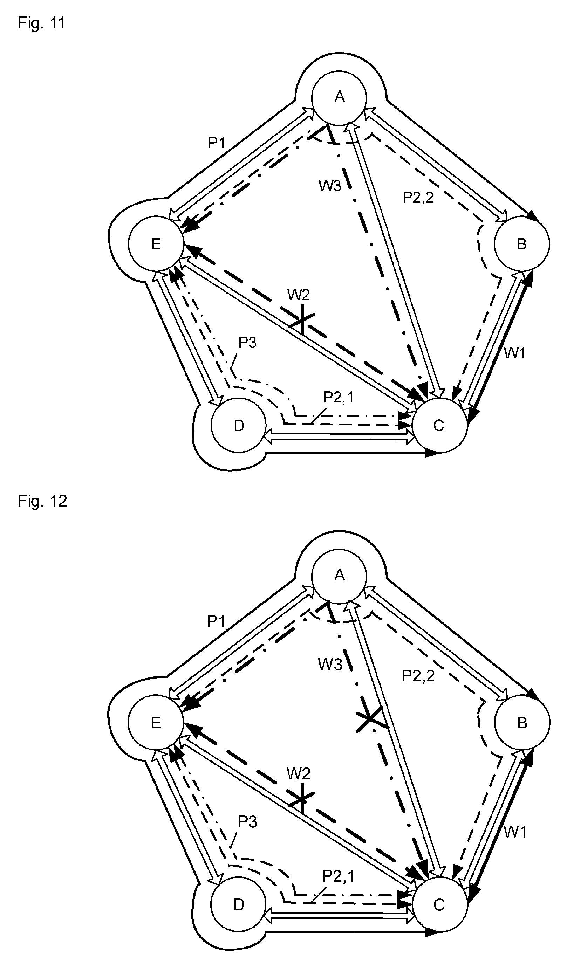

Fig. 11 is a schematic view of protection processing when an on-string service fails according to the disclosure, referring to Fig. 7 for division of working and protected services. As shown in Fig. 11, assume that on-string service W2 fails, and there are two optional protection paths and both of them are in the idle state, as protected service P2,1 suppresses two protected services P1 and P3, while protected service P2,2 only suppresses one protected service P1, the protection priority of protected service P2,2 is therefore higher, the on-string service W2 will be switched to protected service P2,2 with higher priority, protected service P1 will be set to the suppressed state, and an updated suppression relation is flooded.

Fig. 12 is a schematic view of protection processing when there is a second failure according to the disclosure. In the case shown in Fig. 11, working service W3 fails subsequently, in which case, as protected service P3 is in the idle state, service W3 can be switched to the protection path of protected service P3.

After the protection processing shown in Figs. 11 and 12, protected service P1 is suppressed by protected services P2,1 and P3 simultaneously, and the suppression can be removed only when alerts for both working services W2 and W3 disappear. Thus, if working service W1 fails during suppression, only this alert can be recorded for the moment, but switching can not be triggered, and protection processing is performed on the recorded alert when the suppression is removed.

The foregoing are merely preferred embodiments of the disclosure and are not intended to limit the scope of the disclosure. Any modification, equivalent replacement and improvement made within the principle of the disclosure shall fall in the scope of the disclosure.

## Claims

1. A method for sharing service protection in a mesh network, **characterized in that**, the method comprises:
generating (200) a suppression relation according to work path information and protection path information of each service in a protection domain,
wherein, the generating a suppression relation comprises: generating a suppression relation by calculation according to protection path information saved by each service per se;
wherein, the suppression relation comprises an identifier for a local protected service, the number of all protected services that can be suppressed by the local protected service, and an identifier for other protected services that can be suppressed by the local protected service;
and
when a failure appears/disappears, adjusting (201) a protection state of a service according to the suppression relation, and executing protection processing according to the protection state of the service;
wherein the protection state of the service comprises a state of the local protected service, which comprises: an idle state indicating no working service occupying the protection path; a busy state indicating occupation of the protection path; and a suppressed state indicating that the protected service is suppressed by other protected services;
wherein the adjusting a protection state of a service comprises:
when a protected service of the service is in the idle state, if a failure occurs to a local service, then the state of the local protected service is changed to the busy state; and when the failure disappears, the state of the local protected service is returned to the idle state;
when the protected service of the service is in the busy state, if a high priority service grabs off protection resources, then the state of the local protected service is changed to the suppressed state, and is labelled as locally invalid; and when the high priority service releases the protection resources, the state of the local protected service is returned to the busy state;
when the protected service of the service is in the suppressed state and is labelled as locally invalid, if the failure of the local service disappears, then the state of the local protected service is in the suppressed state, but labelled as locally normal; and when the failure of the local service occurs, the state of the local protected service is in the suppressed state, and labelled as locally invalid;
or
when the protected service of the service is in the suppressed state and is labelled as locally normal, if a high priority working service is returned to a work path and releases the protection resources, then the state of the local protected service is changed to the idle state; and if the high priority working service is switched to the protection path and occupies the protection resources, the state of the local protected service is changed to the suppressed state, and is labelled as locally normal.

2. The method according to claim 1, wherein service links between mutually suppressing services with the suppression relation have a same speed, a protection path topology has two or more than two overlapped continuous nodes, and channel numbers used by services are consistent.

3. The method according to claim 1, wherein the protection state of the service comprises a protection state of a work path and a protection state of a protection path;
the protection state of the service comprises the identifier for the local protected service and an identifier for a protected service suppressing the local protected service.

4. The method according to claim 1, wherein the adjusting a protection state of a service according to the suppression relation, and executing protection processing according to the protection state of the service comprises:
when a failure occurs to a work path where a working service in the protection domain is located, checking a protection state of the service:
if a state of a protected service is the idle state, then performing protection switching as so to switch the service to a protection path, and setting other protected services that can be suppressed by the protected service to the suppressed state according to the suppression relation, and flooding a state of a suppressed protected service; and
if the protected service is in the suppressed state, then recording current alerting information.

5. The method according to claim 4, wherein the working service has multiple protection paths, and the performing protection switching so as to switch the service to a protection path comprises: switching the service to a protection path where a protected service with high protection priority is located.

6. The method according to claim 5, wherein determining the protection priority comprises: determining that a protected service that suppresses fewer other protected services has higher protection priority;
when protected services suppress the same number of other protected services, determining that a protected service with a shorter protection path has higher protection priority; and
when protection paths are of the same length, determining that a protected service with a smaller protected service identifier has higher protection priority.

7. The method according to claim 1, wherein the adjusting a protection state of a service according to the suppression relation, and executing protection processing according to the protection state of the service comprises: if a protected service is in the busy state, then performing no protection processing.

8. The method according to any one of claims 4 to 7, wherein the adjusting a protection state of a service according to the suppression relation, and executing protection processing according to the protection state of the service comprises:
when a failure of a work path disappears, checking a state of a protected service of the work path:
if the protected service is in the suppressed state, deleting recorded alerting information; and
if the protected service is in the busy state, returning a working service to the work path, releasing a suppressed protected service, and flooding a state of the released suppressed protected service.

9. An apparatus for service protection in a mesh network, **characterized in that**, the apparatus comprises at least a suppression relation generating/synchronizing module, a protected service state recording module, a protection processing module, and a flooding module, wherein
the suppression relation generating/synchronizing module is configured to generate a suppression relation according to work path information and protection path information of each service , and perform synchronization in a protection domain;
wherein, the generating a suppression relation comprises: generating a suppression relation by calculation according to protection path information saved by each service per se;
wherein, the suppression relation comprises an identifier for a local protected service, the number of all protected services that can be suppressed by the local protected service, and an identifier for other protected services that can be suppressed by the local protected service;
the protected service state recording module is configured to record a protected service state in a protection state of a service, update a state of a protected service as a suppressed state when the protected service is suppressed, and output the state of the suppressed protected service to the flooding module;
the protection processing module is configured to adjust, when a failure appears/disappears, a protection state of a service according to the suppression relation in the suppression relation generating/synchronizing module, execute protection processing according to the protection state of the service, and update the protected service state recorded in the protected service state recording module;
wherein the protection state of the service comprises a state of the local protected service, which comprises: an idle state indicating no working service occupying the protection path; a busy state indicating occupation of the protection path; and a suppressed state indicating that the protected service is suppressed by other protected services;
wherein the adjusting a protection state of a service comprises:
when a protected service of the service is in the idle state, if a failure occurs to a local service, then the state of the local protected service is changed to the busy state; and when the failure disappears, the state of the local protected service is returned to the idle state;
when the protected service of the service is in the busy state, if a high priority service grabs off protection resources, then the state of the local protected service is changed to the suppressed state, and is labelled as locally invalid; and when the high priority service releases the protection resources, the state of the local protected service is returned to the busy state;
when the protected service of the service is in the suppressed state and is labelled as locally invalid, if the failure of the local service disappears, then the state of the local protected service is in the suppressed state, but labelled as locally normal; and when the failure of the local service occurs, the state of the local protected service is in the suppressed state, and labelled as locally invalid;
or
when the protected service of the service is in the suppressed state and is labelled as locally normal, if a high priority working service is returned to a work path and releases the protection resources, then the state of the local protected service is changed to the idle state; and if the high priority working service is switched to the protection path and occupies the protection resources, the state of the local protected service is changed to the suppressed state, and is labelled as locally normal;
and
the flooding module is configured to flood, when receiving a notification from the protection processing module, the protected service state updated by the protected service state recording module within the protection domain.

10. The apparatus according to claim 9, wherein the protection processing module is configured to: check, when a work path fails, a state of a protected service of a protection path of the failing work path according to information in the protected service state recording module;
when the protected service is in an idle state, perform protection switching so as to switch a service to the protection path, set other protected services that can be suppressed by the protected service to a suppressed state according to the suppression relation in the suppression relation generating/synchronizing module, and notify the flooding module to flood a state of the suppressed protected service;
when the protected service is in a suppressed state, record current alerting information; and
when the protected service is in a busy state, bear a service flow on the protection path, and perform no protection processing.

11. The apparatus according to claim 10, wherein the protection processing module is further configured to switch a working service with multiple protection paths preferentially to a protected service with high protection priority.

12. The apparatus according to claim 10 or 11, wherein the protection processing module is configured to: when the failure of the work path disappears, check the state of the protected service of the work path;
when the protected service is in a suppressed state, delete recorded alerting information; and
when the protected service is in a busy state, return the working service to the work path, release the suppressed protected service, and notify the flooding module to flood a state of the restored protected service.

## Patentansprüche

1. Verfahren zur gemeinsamen Nutzung eines Serviceschutzes in einem Mesh-Netzwerk, **dadurch gekennzeichnet, dass** das Verfahren umfasst:
Erzeugen (200) eines Unterdrückungsverhältnisses gemäß den Arbeitspfadinformationen und
Schutzpfadinformationen von jedem Service in einer Schutzdomäne,
wobei das Erzeugen eines Unterdrückungsverhältnisses umfasst: Erzeugen eines Unterdrückungsverhältnisses durch Berechnung gemäß den Schutzpfadinformationen, die von jedem Service per se gespeichert werden;
wobei das Unterdrückungsverhältnis umfasst: eine Kennung für einen lokalen geschützten Service, die Anzahl aller geschützten Services, die durch den lokalen geschützten Service unterdrückt werden können, sowie eine Kennung für andere geschützte Services, die durch den lokalen geschützten Service unterdrückt werden können;
und
wenn ein Fehler auftritt/verschwindet, Anpassen (201) eines Schutzzustands eines Services gemäß dem Unterdrückungsverhältnis und Ausführen einer Schutzverarbeitung gemäß dem Schutzzustand des Services;
wobei der Schutzzustand des Services einen Zustand des lokalen geschützten Services umfasst, der umfasst: einen Ruhezustand, der darauf hinweist, dass kein Arbeitsservice den Schutzpfad belegt; einen Besetztzustand, der darauf hinweist, dass der Schutzpfad belegt ist; und einen unterdrückten Zustand, der darauf hinweist, dass der geschützte Service von anderen geschützten Services unterdrückt wird;
wobei das Anpassen eines Schutzzustands eines Services umfasst:
wenn ein geschützter Service des Services sich im Ruhezustand befindet, falls ein Fehler bei einem lokalen Service auftritt, dann wird der Zustand des lokalen geschützten Services in den Besetztzustand versetzt; und wenn der Fehler verschwindet, wird der Zustand des lokalen geschützten Services in den Ruhezustand zurückversetzt;
wenn der geschützte Service des Services sich im Besetztzustand befindet, falls ein Service mit hoher Priorität Schutzressourcen vorwegnimmt, dann wird der Zustand des lokalen geschützten Services in den unterdrückten Zustand versetzt und als lokal ungültig markiert; und wenn der Service mit hoher Priorität die Schutzressourcen wieder freigibt, dann wird der Zustand des lokalen geschützten Services in den Besetztzustand zurückversetzt;
wenn der geschützte Service des Services sich im unterdrückten Zustand befindet und als lokal ungültig markiert ist, falls der Fehler des lokalen Services verschwindet, dann befindet sich der Zustand des lokalen geschützten Services in dem unterdrückten Zustand und wird als lokal normal markiert; und wenn der Fehler des lokalen Services auftritt, dann befindet sich der Zustand des lokalen geschützten Services in dem unterdrückten Zustand und wird als lokal ungültig markiert;
oder
wenn der geschützte Service des Services sich im unterdrückten Zustand befindet und als lokal normal markiert ist, falls ein Arbeitsservice mit hoher Priorität in einen Arbeitspfad zurückkehrt und die Schutzressourcen wieder freigibt, dann wird der Zustand des lokalen geschützten Services in den Ruhezustand versetzt; und falls der Arbeitsservice mit hoher Priorität in den Schutzpfad umgeschaltet wird und die Schuztressourcen belegt, dann wird der Zustand des lokalen geschützten Services in den unterdrückten Zustand versetzt und als lokal normal markiert.

2. Verfahren gemäß Anspruch 1, wobei Servicelinks zwischen sich gegenseitig unterdrückenden Services mit dem Unterdrückungsverhältnis die gleiche Geschwindigkeit aufweisen, die Topologie eines Schutzpfades zwei oder mehr als zwei überlappende, durchgehende Knoten aufweist und die Kanalnummern, die von den Services verwendet werden, konsistent sind.

3. Verfahren gemäß Anspruch 1, wobei der Schutzzustand des Services einen Schutzzustand eines Arbeitspfads und einen Schutzzustand einen Schutzpfads umfasst;
wobei der Schutzzustand des Services die Kennung für den lokalen geschützten Service und eine Kennung für einen geschützten Service, der den lokalen geschützten Service unterdrückt, umfasst.

4. Verfahren gemäß Anspruch 1, wobei das Anpassen eines Schutzzustands eines Services gemäß dem Unterdrückungsverhältnis und das Ausführen einer Schutzverarbeitung gemäß dem Schutzzustand des Services umfassen:
wenn ein Fehler bei einem Arbeitspfad auftritt, bei dem ein Arbeitsservice in der Schutzdomäne lokalisiert wird, Überprüfen eines Schutzzustandes des Services:
falls ein Zustand eines geschützten Services sich im Ruhezustand befindet, dann Durchführen einer Schutzumschaltung, um den Service in einen Schutzpfad umzuschalten, und Versetzen anderer geschützter Services, die von dem geschützten Service unterdrückt werden können, gemäß dem Unterdrückungsverhältnis in den unterdrückten Zustand, und Überstromen eines unterdrückten geschützten Services; und
falls der geschützte Service sich im unterdrückten Zustand befindet, dann Aufzeichnen aktueller Hinweisinformationen.

5. Verfahren gemäß Anspruch 4, wobei der Arbeitspfad multiple Schutzpfade aufweist und wobei das Durchführen einer Schutzumschaltung, um den Service in einen Schutzpfad umzuschalten, umfasst: Umschalten des Services in einen Schutzpfad, in dem ein geschützter Service mit hoher Priorität lokalisiert ist.

6. Verfahren gemäß Anspruch 5, wobei das Bestimmen der Schutzpriorität umfasst: Bestimmen, dass ein geschützter Service, der weniger andere geschützte Services unterdrückt, eine höhere Schutzpriorität aufweist;
wenn geschützte Services die gleiche Anzahl von anderen geschützten Services unterdrücken, Bestimmen, dass ein geschützter Service mit einem kürzeren Schutzpfad eine höhere Priorität aufweist; und
wenn Schutzpfade die gleiche Länge aufweisen, Bestimmen, dass ein geschützter Service mit einer kürzeren Kennung des geschützten Services eine höhere Priorität aufweist.

7. Verfahren gemäß Anspruch 1, wobei das Anpassen eines Schutzzustands eines Services gemäß dem Unterdrückungsverhältnis und das Ausführen einer Schutzverarbeitung gemäß dem Schutzzustand des Services umfassen: falls ein geschützter Service sich im Besetztzustand befindet, dann kein Durchführen einer Schutzverarbeitung.

8. Verfahren gemäß einem der Ansprüche 4 bis 7, wobei das Anpassen eines Schutzzustands eines Services gemäß dem Unterdrückungsverhältnis und das Ausführen einer Schutzverarbeitung gemäß dem Schutzzustand des Services umfassen:
wenn ein Fehler eines Arbeitspfades verschwindet, Überprüfen eines Zustands eines geschützten Services des Arbeitspfades:
falls der geschützte Service sich im unterdrückten Zustand befindet, dann Löschen von aufgezeichneten Hinweisinformationen; und
falls der geschützte Service sich im Besetztzustand befindet, Zurückführen eines Arbeitsservices in den Arbeitspfad, Freigeben eines unterdrückten geschützten Services und Überstromen eines Zustands des wieder freigegebenen unterdrückten geschützten Services.

9. Vorrichtung für Serviceschutz in einem Mesh-Netzwerk, **dadurch gekennzeichnet, dass** die Vorrichtung umfasst: wenigstens ein Modul zur Erzeugung/Synchronisation eines Unterdrückungsverhältnisses, ein Modul zur Aufzeichnung des Zustands des geschützten Services, ein Schutzverarbeitungsmodul und ein Überstromungsmodul, wobei
das Modul zur Erzeugung/Synchronisation eines Unterdrückungsverhältnisses dazu konfiguriert ist, ein Unterdrückungsverhältnis gemäß den Arbeitspfadinformationen und den Schutzpfadinformationen von jedem Service durchzuführen, und dazu, eine Synchronisation in einer Schutzdomäne durchzuführen;
wobei das Erzeugen eines Unterdrückungsverhältnisses umfasst: Erzeugen eines Unterdrückungsverhältnisses durch Berechnung gemäß den Schutzpfadinformationen, die von jedem Service per se gespeichert wurden;
wobei das Unterdrückungsverhältnis umfasst: eine Kennung für einen lokalen geschützten Service, die Anzahl aller geschützten Services, die durch den lokalen geschützten Service unterdrückt werden können, sowie eine Kennung für andere geschützte Services, die durch den lokalen geschützten Service unterdrückt werden können,
das Modul zur Aufzeichnung des Zustands des geschützten Services dazu konfiguriert ist, einen Zustand des geschützten Services in einem Schutzzustand eines Services aufzuzeichnen, den Zustand eines geschützten Services als einen unterdrückten Zustand zu aktualisieren, wenn der geschützte Service unterdrückt ist, und den Zustand des unterdrückten geschützten Services an das Überstromungsmodul auszugeben;
das Schutzverarbeitungsmodul dazu konfiguriert ist, wenn ein Fehler auftritt/verschwindet, einen Schutzzustand eines Services gemäß dem Unterdrückungsverhältnis in dem Modul zur Erzeugung/Synchronisation eines Unterdrückungsverhältnisses anzupassen, eine Schutzverarbeitung gemäß dem Schutzzustand des Services auszuführen und den in dem Modul zur Aufzeichnung des Zustands des geschützten Services aufgezeichneten Zustand des geschützten Services zu aktualisieren;
wobei der Schutzzustand des Services einen Zustand des lokalen geschützten Services umfasst, welcher umfasst: einen Ruhezustand, der darauf hinweist, dass kein Arbeitsservice den Schutzpfad belegt; einen Besetztzustand, der darauf hinweist, dass der Schutzpfad belegt ist; und einen unterdrückten Zustand, der darauf hinweist, dass der geschützte Service von anderen geschützten Services unterdrückt wird;
wobei das Anpassen eines Schutzzustands eines Services umfasst:
wenn ein geschützter Service des Services sich im Ruhezustand befindet, falls ein Fehler bei einem lokalen Service auftritt, dann wird der Zustand des lokalen geschützten Services in den Besetztzustand versetzt; und wenn der Fehler verschwindet, dann wird der Zustand des lokalen geschützten Services in den Ruhezustand zurückversetzt;
wenn der geschützte Service des Services sich im Besetztzustand befindet, falls ein Service mit hoher Priorität Schutzressourcen vorwegnimmt, dann wird der Zustand des lokalen geschützten Services in den unterdrückten Zustand versetzt und als lokal ungültig markiert; und wenn der Service mit hoher Priorität die Schutzressourcen wieder freigibt, dann wird der Zustand des lokalen geschützten Services in den Besetztzustand zurückversetzt;
wenn der geschützte Service des Services sich im unterdrückten Zustand befindet und als lokal ungültig markiert ist, falls der Fehler des lokalen Services verschwindet, dann befindet sich der Zustand des lokalen geschützten Services in dem unterdrückten Zustand, wird aber als lokal normal markiert; und wenn der Fehler des lokalen Services auftritt, dann befindet sich der Zustand des lokalen geschützten Services in dem unterdrückten Zustand und wird als lokal ungültig markiert;
oder
wenn der geschützte Service des Services sich im unterdrückten Zustand befindet und als lokal normal markiert ist, falls ein Arbeitsservice mit hoher Priorität in einen Arbeitspfad zurückkehrt und die Schutzressourcen wieder freigibt, dann wird der Zustand des lokalen geschützten Services in den Ruhezustand versetzt; und falls der Arbeitsservice mit hoher Priorität in den Schutzpfad umgeschaltet wird und die Schuztressourcen belegt, dann wird der Zustand des lokalen geschützten Services in den unterdrückten Zustand versetzt und als lokal normal markiert;
und
das Überstromungsmodul dazu konfiguriert ist, wenn es eine Benachrichtigung von dem Schutzverarbeitungsmodul empfängt, den Zustand des geschützten Services, der von dem Modul zur Aufzeichnung des Zustands des geschützten Services innerhalb der Schutzdomäne aktualisiert wurde, zu überstromen.

10. Vorrichtung gemäß Anspruch 9, wobei das Schutzverarbeitungsmodul dazu konfiguriert ist:
wenn ein Arbeitspfad fehlerbehaftet ist, den Zustand eines geschützten Services eines Schutzpfades des fehlerbehafteten Arbeitspfades gemäß den Informationen in dem Modul zur Aufzeichnung des Zustands des geschützten Services zu überprüfen;
wenn der geschützten Service sich im Ruhezustand befindet, eine Schutzumschaltung durchzuführen, um einen Service in den Schutzpfad umzuschalten, andere geschützte Services, die von dem geschützten Service unterdrückt werden können, gemäß dem Unterdrückungsverhältnis in dem Modul zur Erzeugung/Synchronisation eines Unterdrückungsverhältnisses in den unterdrückten Zustand zu versetzen, und das Überstromungsmodul zu benachrichtigen, damit dieses einen Zustand des unterdrückten geschützten Services überstromt;
wenn der geschützte Service sich im unterdrückten Zustand befindet, dann Aufzeichnen aktueller Hinweisinformationen; und
wenn der geschützte Service sich im Besetztzustand befindet, einen Servicefluss an den Schutzpfad zu übertragen und keine Schutzverarbeitung durchzuführen.

11. Vorrichtung gemäß Anspruch 10, wobei das Schutzverarbeitungsmodul weiterhin dazu konfiguriert ist, einen Arbeitsservice mit multiplen Schutzpfaden vorzugsweise in einen geschützten Service mit einer hohen Schutzpriorität umzuschalten.

12. Vorrichtung gemäß Anspruch 10 oder 11, wobei das Schutzverarbeitungsmodul dazu konfiguriert ist: wenn der Fehler des Arbeitspfades verschwindet, den Zustand des geschützten Services des Arbeitspfades zu überprüfen;
wenn der geschützte Service sich im unterdrückten Zustand befindet, aufgezeichnete Hinweisinformationen zu löschen; und
wenn der geschützte Service sich im Besetztzustand befindet, einen Arbeitsservice in den Arbeitspfad zurück zu führen, den unterdrückten geschützten Service wieder freizugeben und das Überstromungsmodul zu benachrichtigen, einen Zustand des wieder hergestellten unterdrückten geschützten Services zu überstromen.

## Revendications

1. Procédé de partage de la protection des services dans un réseau maillé, **caractérisé en ce que** le procédé comprend :
la génération (200) d'une relation de répression conformément à des informations concernant les chemins opérationnels et des informations concernant les chemins de protection de chaque service d'un domaine de protection,
dans lequel la génération d'une relation de répression comprend : la génération d'une relation de répression par calcul conformément aux informations concernant les chemins de protection sauvegardées par chaque service en soi ;
dans lequel la relation de répression comprend un identifiant relatif à un service protégé local, le nombre total des services protégés pouvant être réprimés par le service protégé local, et un identifiant relatif aux autres services protégés pouvant être réprimés par le service protégé local ;
et
lorsqu'une panne apparaît/disparaît, l'ajustement (201) d'un état de protection d'un service conformément à la relation de répression, et l'exécution du traitement de protection conformément à l'état de protection du service ;
dans lequel l'état de protection du service comprend un état du service protégé local, lequel comprend : un état de repos indicateur de l'absence de service en fonctionnement occupant le chemin de protection ; un état occupé indicateur de l'occupation du chemin de protection ; et un état réprimé indicateur du fait que le service protégé est réprimé par d'autres services protégés ;
dans lequel l'ajustement d'un état de protection d'un service comprend :
lorsqu'un service protégé du service est à l'état de repos, si une panne se produit chez un service local, alors l'état du service protégé local passe à l'état occupé ; et lorsque la panne disparaît, l'état du service protégé local repasse à l'état de repos ;
lorsque le service protégé du service est à l'état occupé, si un service à haute priorité accapare les ressources de protection, alors l'état du service protégé local passe à l'état réprimé et est caractérisé de localement invalide ; et lorsque le service à haute priorité libère les ressources de protection, l'état du service protégé local repasse à l'état occupé ;
lorsque le service protégé du service est à l'état réprimé et est caractérisé de localement invalide, si la panne du service local disparaît, alors l'état du service protégé local est à l'état réprimé mais caractérisé de localement normal ; et lorsque la panne du service local se produit, l'état du service protégé local est à l'état réprimé et caractérisé de localement invalide ;
ou
lorsque le service protégé du service est à l'état réprimé et est caractérisé de localement normal, si un service en fonctionnement à haute priorité est renvoyé à un chemin opérationnel et libère les ressources de protection, alors l'état du service protégé local passe à l'état de repos ; et si le service en fonctionnement à haute priorité est orienté vers le chemin de protection et occupe les ressources de protection, l'état du service protégé local passe à l'état réprimé et est caractérisé de localement normal.

2. Procédé selon la revendication 1, dans lequel des liens de services entre des services à répression mutuelle présentant la relation de répression ont la même vitesse, la topologie des chemins de protection présente deux, ou plus de deux, noeuds continus en chevauchement et les nombres des canaux utilisés par les services sont en correspondance.

3. Procédé selon la revendication 1, dans lequel l'état de protection du service comprend un état de protection d'un chemin opérationnel et un état de protection d'un chemin de protection ;
l'état de protection du service comprend l'identifiant relatif au service protégé local et un identifiant relatif à un service protégé réprimant le service protégé local.

4. Procédé selon la revendication 1, dans lequel l'ajustement d'un état de protection d'un service conformément à la relation de répression, et l'exécution du traitement de protection conformément à l'état de protection du service comprennent les opérations consistant à :
lorsqu'une panne se produit chez un chemin opérationnel dans lequel se situe un service en fonctionnement dans le domaine de protection, vérifier un état de protection du service :
si l'état d'un service protégé est l'état de repos, réaliser l'orientation de la protection de manière à orienter le service vers un chemin de protection, et mettre les autres services protégés pouvant être réprimés par le service protégé à l'état réprimé conformément à la relation de répression, et inonder un état d'un service protégé réprimé ; et
si le service protégé est à l'état réprimé, enregistrer les informations d'alertes actuelles.

5. Procédé selon la revendication 4, dans lequel le service en fonctionnement possède de multiples chemins de protection, et la réalisation de l'orientation de la protection de manière à orienter le service vers un chemin de protection comprend : l'orientation du service vers un chemin de protection dans lequel se situe un service protégé à haute priorité de protection.

6. Procédé selon la revendication 5, dans lequel la détermination de la priorité de protection comprend : la détermination du fait qu'un service protégé qui réprime une moindre quantité d'autres services protégés présente une priorité de protection supérieure ;
lorsque les services protégés répriment le même nombre d'autres services protégés, la détermination du fait qu'un service protégé disposant d'un chemin de protection plus court présente une priorité de protection supérieure ; et
lorsque les chemins de protection sont de la même longueur, la détermination du fait qu'un service protégé disposant d'un identifiant de service protégé plus court présente une priorité de protection supérieure.

7. Procédé selon la revendication 1, dans lequel l'ajustement d'un état de protection d'un service conformément à la relation de répression, et l'exécution du traitement de protection conformément à l'état de protection du service comprennent l'opération consistant à : si un service protégé est à l'état occupé, ne pas réaliser de traitement de protection.

8. Procédé selon l'une quelconque des revendications 4 à 7, dans lequel l'ajustement d'un état de protection d'un service conformément à la relation de répression, et l'exécution du traitement de protection conformément à l'état de protection du service comprennent les opérations consistant à :
lorsqu'une panne d'un chemin opérationnel disparaît, vérifier l'état d'un service protégé du chemin opérationnel :
si le service protégé est à l'état réprimé, effacer les informations d'alertes enregistrées ; et
si le service protégé est à l'état occupé, renvoyer un service en fonctionnement au chemin opérationnel, libérer un service protégé réprimé, et inonder un état du service protégé réprimé libéré.

9. Appareil pour la protection des services dans un réseau maillé, **caractérisé en ce que** l'appareil comprend au moins un module de génération/synchronisation de relation de répression, un module d'enregistrement d'état de service protégé, un module de traitement de protection et un module d'inondation, dans lequel
le module de génération/synchronisation de relation de répression est configuré pour générer une relation de répression conformément à des informations concernant les chemins opérationnels et des informations concernant les chemins de protection de chaque service et pour réaliser la synchronisation d'un domaine de protection ;
dans lequel la génération d'une relation de répression comprend : la génération d'une relation de répression par calcul conformément aux informations concernant les chemins de protection sauvegardées par chaque service en soi ;
dans lequel la relation de répression comprend un identifiant relatif à un service protégé local, le nombre total des services protégés pouvant être réprimés par le service protégé local, et un identifiant relatif aux autres services protégés pouvant être réprimés par le service protégé local ;
le module d'enregistrement d'état de service protégé est configuré pour enregistrer un état de service protégé dans un état de protection d'un service, actualiser l'état d'un service protégé en état réprimé lorsque le service protégé est réprimé, et communiquer l'état du service protégé réprimé auprès du module d'inondation ;
le module de traitement de protection est configuré pour ajuster, lorsqu'une panne apparaît/disparaît, un état de protection d'un service conformément à la relation de répression du module de génération/synchronisation de relation de répression, exécuter un traitement de protection conformément à l'état de protection du service et actualiser l'état du service protégé enregistré dans le module d'enregistrement d'état de service protégé ;
dans lequel l'état de protection du service comprend un état du service protégé local, lequel comprend : un état de repos indicateur de l'absence de service en fonctionnement occupant le chemin de protection ; un état occupé indicateur de l'occupation du chemin de protection ; et un état réprimé indicateur du fait que le service protégé est réprimé par d'autres services protégés ;
dans lequel l'ajustement d'un état de protection d'un service comprend :
lorsqu'un service protégé du service est à l'état de repos, si une panne se produit chez un service local, alors l'état du service protégé local passe à l'état occupé ; et lorsque la panne disparaît, l'état du service protégé local repasse à l'état de repos ;
lorsque le service protégé du service est à l'état occupé, si un service à haute priorité accapare les ressources de protection, alors l'état du service protégé local passe à l'état réprimé et est caractérisé de localement invalide ; et lorsque le service à haute priorité libère les ressources de protection, l'état du service protégé local repasse à l'état occupé ;
lorsque le service protégé du service est à l'état réprimé et est caractérisé de localement invalide, si la panne du service local disparaît, alors l'état du service protégé local est à l'état réprimé mais caractérisé de localement normal ; et lorsque la panne du service local se produit, l'état du service protégé local est à l'état réprimé et caractérisé de localement invalide ;
ou
lorsque le service protégé du service est à l'état réprimé et est caractérisé de localement normal, si un service en fonctionnement à haute priorité est renvoyé à un chemin opérationnel et libère les ressources de protection, alors l'état du service protégé local passe à l'état de repos ; et si le service en fonctionnement à haute priorité est orienté vers le chemin de protection et occupe les ressources de protection, l'état du service protégé local passe à l'état réprimé et est caractérisé de localement normal ;
et
le module d'inondation est configuré pour inonder, lors de la réception d'un ordre en provenance du module de traitement de protection, l'état de service protégé actualisé par le module d'enregistrement d'état de service protégé au sein du domaine de protection.

10. Appareil selon la revendication 9, dans lequel le module de traitement de protection est configuré pour : vérifier, lorsqu'un chemin opérationnel est défaillant, l'état d'un service protégé d'un chemin de protection du chemin opérationnel défaillant conformément aux informations du module d'enregistrement d'état de service protégé ;
lorsque le service protégé est dans un état de repos, réaliser l'orientation de la protection de manière à orienter un service vers le chemin de protection, mettre les autres services protégés pouvant être réprimés par le service protégé dans un état réprimé conformément à la relation de répression du module de génération/synchronisation de relation de répression, et ordonner au module d'inondation d'inonder l'état du service protégé réprimé ;
lorsque le service protégé est dans un état réprimé, enregistrer les informations d'alertes actuelles ; et
lorsque le service protégé est dans un état occupé, supporter un flux de service sur le chemin de protection et ne réaliser aucun traitement de protection.

11. Appareil selon la revendication 10, dans lequel le module de traitement de protection est configuré en outre pour faire passer un service en fonctionnement présentant de multiples chemins de protection de préférence à un service protégé à haute priorité de protection.

12. Appareil selon la revendication 10 ou 11, dans lequel le module de traitement de protection est configuré pour : lorsque la panne du chemin opérationnel disparaît, vérifier l'état du service protégé du chemin opérationnel ;
lorsque le service protégé est dans un état réprimé, effacer les informations d'alerte enregistrées ; et lorsque le service protégé est dans un état occupé, renvoyer le service en fonctionnement au chemin opérationnel, libérer le service protégé réprimé et ordonner au module d'inondation d'inonder l'état du service protégé restauré.
